# EUROPÄISCHE PATENTSCHRIFT

(11) **EP 1 598 537 B1**
(45) Veröffentlichungstag und Bekanntmachung des Hinweises auf die Patenterteilung: **03.10.2012**
(21) Anmeldenummer: 04012136.0
(22) Anmeldetag: 21.05.2004
(51) Int. Cl.: F02C 7/16, F02C 7/12, F01D 25/12, F01D 5/08

(54) **Dampfturbinen-Körper, Verfahren zum Kühlen einer Dampfturbine sowie Verwendung**
Steam turbine body and method of cooling a steam turbine
Corps d'une turbine à vapeur et procédé de refroidissement d'une turbine à vapeur

(43) Veröffentlichungstag der Anmeldung: 23.11.2005
(73) Patentinhaber: SIEMENS AKTIENGESELLSCHAFT, 80333 München (DE)
(72) Erfinder: Haje, Detlef, Dr., 46236 Bottrop (DE); Walkenhorst, Jan, Dr., 45479 Mülheim (DE); de Lazzer, Armin, Dr., 45479 Mülheim (DE)

(56) Entgegenhaltungen:
- EP-A- 1 050 666
- US-A- 2 297 853
- US-A- 5 358 374

## Beschreibung

Die Erfindung betrifft einen Dampfturbinen-Körper, der entlang einer Längsrichtung einen Strömungskanal begrenzt, der zur Aufnahme einer Hauptströmung eines fluiden Arbeitsmediums mit einem Strömungsdruck vorgesehen ist, und der ein zum Strömungskanal offenes Kühlkanalsystem zur Aufnahme einer Kühlmediumströmung mit einem Kühlmediumdruck aufweist.

Die Erfindung betrifft des Weiteren ein Verfahren zum Kühlen einer Dampfturbine, wobei der Strömungskanal mit einer Hauptströmung eines fluiden Arbeitsmediums mit einem Strömungsdruck beaufschlagt wird, und das Kühlkanalsystem mit einer Kühlmediumströmung mit einem Kühlmediumdruck beaufschlagt wird.

Die Erfindung betrifft auch eine Verwendung.

Unter einer Dampfturbine im Sinne der vorliegenden Anmeldung wird jede Turbine oder Teilturbine verstanden, die von einem Arbeitsmedium in Form von Dampf durchströmt wird. Im Unterschied dazu werden Gasturbinen mit Gas und/oder Luft als Arbeitsmedium durchströmt, das jedoch völlig anderen Temperatur- und Druckbedingungen unterliegt als der Dampf bei einer Dampfturbine. Im Gegensatz zu Gasturbinen weist bei Dampfturbinen z. B. das einer Teilturbine zuströmende Arbeitsmedium mit der höchsten Temperatur gleichzeitig den höchsten Druck auf. Ein offenes Kühlsystem mit einem zum Strömungskanal offenen Kühlkanalsystem ist bei Gasturbinen auch ohne Teilturbinen-externe Zuführung von Kühlmedium realisierbar. Für eine Dampfturbine sollte eine externe Zuführung vorgesehen sein. Der Stand der Technik betreffend Gasturbinen kann schon deswegen nicht für die Beurteilung des vorliegenden Anmeldungsgegenstands herangezogen werden.

Ein einen Strömungskanal begrenzender Dampfturbinen-Körper kann in Form eines Rotors oder eines Gehäuses gebildet sein. Eine Dampfturbine umfasst üblicherweise einen mit Schaufeln besetzten drehbar gelagerten Rotor, der innerhalb eines Gehäuses bzw. Gehäusemantels angeordnet ist. Bei Durchströmung des vom Gehäusemantel gebildeten Innenraums des Strömungskanals mit erhitztem und unter Druck stehendem Dampf wird der Rotor über die Schaufeln durch den Dampf in Drehung versetzt. Die Schaufeln des Rotors werden auch als Laufschaufeln bezeichnet. Diese sind üblicherweise als Laufschaufelreihe entlang des Außenumfangs an der Außenseite des Rotors angeordnet. Am Gehäusemantel sind darüber hinaus üblicherweise stationäre Leitschaufeln aufgehängt, welche entlang einer axialen Ausdehnung des Körpers in die Zwischenräume der Rotorschaufeln greifen. Eine Leitschaufel ist üblicherweise an einer ersten Stelle entlang einer Innenseite des Dampfturbinen-Gehäuses gehalten. Dabei ist sie üblicherweise Teil einer Leitschaufelreihe, welche eine Anzahl von Leitschaufeln umfasst, die entlang eines Innenumfangs an der Innenseite des Dampfturbinen-Gehäuses angeordnet sind. Dabei weist jede Leitschaufel mit ihrem Schaufelblatt radial nach innen. Eine Leitschaufelreihe an der genannten ersten Stelle entlang der axialen Ausdehnung wird auch als Leitschaufelgitter oder -kranz bezeichnet. Üblicherweise sind eine Anzahl von Leitschaufelreihen hintereinander geschaltet. Entsprechend ist an einer zweiten Stelle entlang der axialen Ausdehnung hinter der ersten Stelle eine weitere zweite Schaufel entlang der Innenseite des Dampfturbinen-Gehäuses gehalten. Ein Paar einer Laufschaufelreihe und einer Leitschaufelreihe wird auch als Schaufelstufe bezeichnet.

Der Gehäusemantel einer derartigen Dampfturbine kann aus einer Anzahl von Gehäusesegmenten gebildet sein. Unter dem Gehäusemantel der Dampfturbine ist insbesondere das stationäre Gehäusebauteil einer Dampfturbine oder einer Teilturbine zu verstehen, das entlang der Längsrichtung der Dampfturbine einen Innenraum in Form eines Strömungskanals aufweist, der zur Durchströmung mit dem Arbeitsmedium in Form von Dampf vorgesehen ist. Dies kann, je nach Dampfturbinenart, ein Innengehäuse und/oder ein Leitschaufelträger sein. Es kann aber auch ein Turbinengehäuse vorgesehen sein, welches kein Innengehäuse oder keinen Leitschaufelträger aufweist.

Aus Wirkungsgradgründen kann die Auslegung einer derartigen Dampfturbine für so genannte "hohe Dampfparameter", also insbesondere hohe Dampfdrücke und/oder hohe Dampftemperaturen, wünschenswert sein. Allerdings ist insbesondere eine Temperaturerhöhung aus materialtechnischen Gründen nicht unbegrenzt möglich. Um dabei einen sicheren Betrieb der Dampfturbine auch bei besonders hohen Temperaturen zu ermöglichen, kann daher eine Kühlung einzelner Bauteile oder Komponenten wünschenswert sein. Die Bauteile sind nämlich in ihrer Temperaturfestigkeit begrenzt. Ohne effiziente Kühlung würden bei steigenden Temperaturen wesentlich teurere Materialien (z. B. Nickelbasislegierungen) nötig.

Bei den bisher bekannten Kühlmethoden, insbesondere für einen Dampfturbinen-Körper in Form eines Dampfturbinen-Gehäuses oder eines Rotors, ist zwischen einer aktiven Kühlung und einer passiven Kühlung zu unterscheiden. Bei einer aktiven Kühlung wird eine Kühlung durch ein dem Dampfturbinen-Körper separat, d. h. zusätzlich zum Arbeitsmedium zugeführtes Kühlmedium bewirkt. Dagegen erfolgt eine passive Kühlung lediglich durch eine geeignete Führung oder Verwendung des Arbeitsmediums. Bisher wurden Dampfturbinen-Körper vorzugsweise passiv gekühlt.

So ist beispielsweise aus der DE 3421067 C2 bekannt, ein Innengehäuse einer Dampfturbine mit kühlem, bereits expandiertem Dampf zu umströmen. Dies hat jedoch den Nachteil, dass eine Temperaturdifferenz über die Innengehäusewandung beschränkt bleiben muss, da sich sonst bei einer zu großen Temperaturdifferenz das Innengehäuse thermisch zu stark verformen würde. Bei einer Umströmung des Innengehäuses findet zwar eine Wärmeabfuhr statt, jedoch erfolgt die Wärmeabfuhr relativ weit entfernt von der Stelle der Wärmezufuhr. Eine Wärmeabfuhr in unmittelbarer Nähe der Wärmezufuhr ist bisher nicht in ausreichendem Maße verwirklicht worden. Eine weitere passive Kühlung kann mittels einer geeigneten Gestaltung der Expansion des Arbeitsmediums in einer so genannten Diagonalstufe erreicht werden. Hierüber lässt sich allerdings nur eine sehr begrenzte Kühlwirkung für das Gehäuse erzielen.

Eine Schaufelkühlung ist aus der WO 97/08431 bekannt.

In der US 6,102,654 ist eine aktive Kühlung einzelner Komponenten innerhalb eines Dampfturbinen-Gehäuses beschrieben, wobei die Kühlung auf den Einströmbereich des heißen Arbeitsmediums beschränkt ist. Ein Teil des Kühlmediums wird dem Arbeitsmedium beigemischt. Die Kühlung soll dabei durch ein Anströmen der zu kühlenden Komponenten erreicht werden.

Aus der WO 97/49901 und WO 97/49900 ist bekannt, einen einzelnen Leitschaufelkranz zur Abschirmung einzelner Rotorbereiche selektiv durch einen von einem zentralen Hohlraum bespeisten separaten radialen Kanal im Rotor mit einem Medium zu beaufschlagen. Dazu wird das Medium über den Kanal dem Arbeitsmedium beigemischt und der Leitschaufelkranz selektiv angeströmt. Bei der dazu vorgesehenen mittigen Hohlbohrung des Rotors sind jedoch erhöhte Fliehkraftspannungen in Kauf zu nehmen, was einen erheblichen Nachteil in Auslegung und Betrieb darstellt.

Aus den Druckschriften WO 01/46576, DE 196 20 828 C1, WO 97/25521 und DE 34 21 067 C2 ist es bekannt, einer Dampfturbine über deren hohl ausgeführten Rotor ein Kühlmedium zuzuführen und dieses im Bereich einzelner Schaufelfüße austreten zu lassen. Auch wird selektiv nur eine bestimmte Stelle des Rotors gekühlt. Weiterhin tritt auch hier eine einen erheblichen Nachteil darstellende große Erhöhung der Fliehkraftspannungen auf.

In der EP 1154123 ist eine Möglichkeit der Entnahme und Führung eines Kühlmediums aus anderen Bereichen eines Dampfsystems und die Zuführung des Kühlmediums im Einströmbereich des Arbeitsmediums beschrieben.

Aus der EP 1050666 ist es bekannt, den aus einer Hochdruck-Teilturbine ausströmenden Dampf über eine Strömungsleitung einer Mitteldruck-Teilturbine als Kühldampf zuzuführen.

In der Strömungsleitung ist ein regelbares Ventil angeordnet, das von einer Regeleinheit betrieben wird. Darüber hinaus sind in der Strömungsleitung Drucksensoren angeordnet, die Signale zu der Regeleinheit senden. Dadurch kann abhängig von der gewünschten Kühlleistung der Massenstrom des Kühldampfes in der Strömungsleitung geregelt werden.

Zur Erzielung höherer Wirkungsgrade bei der Stromerzeugung mit fossilen Brennstoffen besteht das Bedürfnis, bei einer Turbine höhere Dampfparameter, d. h. höhere Drücke und Temperaturen als bisher üblich anzuwenden. Bei Hochtemperatur-Dampfturbinen sind beim Dampf als Arbeitsmedium Temperaturen zum Teil weit über 500 °C, insbesondere über 540 °C, vorgesehen. Diese Parameter machen eine Hochtemperatur-Dampfturbine aus. Im Detail sind solche Dampfparameter für Hochtemperatur-Dampfturbinen in dem Artikel "Neue Dampfturbinenkonzepte für höhere Eintrittsparameter und längere Endschaufeln" von H. G. Neft und G. Franconville in der Zeitschrift VGB Kraftwerkstechnik, Nr. 73 (1993), Heft 5, angegeben.

Insbesondere sind Beispiele höherer Dampfparameter für Hochtemperatur-Dampfturbinen in Bild 13 des Artikels genannt. In dem genannten Artikel wird zur Verbesserung der Kühlung eines Hochtemperatur-Dampfturbinen-Gehäuses eine Kühldampfzufuhr und Weiterleitung des Kühldampfs durch die erste Leitschaufelreihe vorgeschlagen. Damit wird zwar eine aktive Kühlung bereitgestellt. Diese ist jedoch auf den Hauptströmungsbereich des Arbeitsmediums beschränkt und noch verbesserungswürdig.

Alle bisher bekannten Kühlverfahren für ein Dampfturbinen-Gehäuse sehen also, soweit es sich überhaupt um aktive Kühlverfahren handelt, allenfalls ein gezieltes Anströmen eines separaten und zu kühlenden Turbinenteiles vor und sind auf den Einströmbereich des Arbeitsmediums, allenfalls unter Einbeziehung des ersten Leitschaufelkranzes, beschränkt. Dies kann bei einer Belastung üblicher Dampfturbinen mit höheren Dampfparametern zu einer auf die ganze Turbine wirkenden, erhöhten thermischen Belastung führen, welche durch eine oben beschriebene übliche Kühlung des Gehäuses nur unzureichend abgebaut werden könnte. Dampfturbinen, die zur Erzielung höherer Wirkungsgrade grundsätzlich mit höheren Dampfparametern arbeiten, benötigen eine verbesserte Kühlung, insbesondere des Gehäuses und/oder des Rotors, um eine höhere thermische Belastung der Dampfturbine in genügendem Maße abzubauen. Dabei besteht das Problem, dass bei der Nutzung bisher üblicher Turbinenmaterialien die zunehmende Beanspruchung des Dampfturbinen-Körpers durch erhöhte Dampfparameter, z. B. gemäß dem "Neft"-Artikel, zu einer nachteiligen thermischen Belastung des Körpers führen kann, so dass diese technisch nicht mehr ausführbar sind.

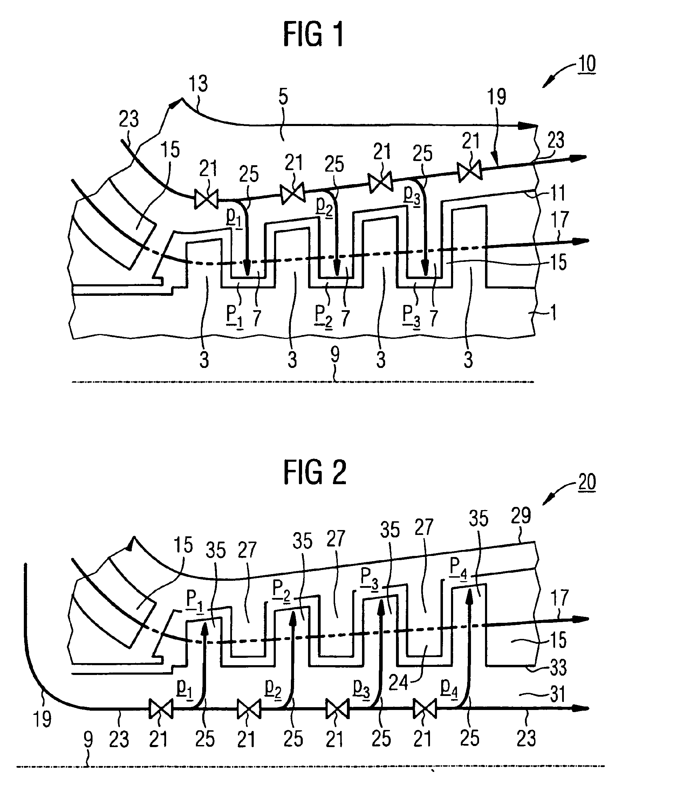

In den veröffentlichten europäischen Patentanmeldungen EP A 1445 427 und EP A 1 452 688 , jeweils mit Zeitrang vom 05. Februar 2003, sind ein aktiv gekühlter Rotor und ein aktiv gekühltes Gehäuse beschrieben, bei dem ein zum Strömungskanal offenes, im Körper integriertes Kühlkanalsystem zur Aufnahme einer Kühlmediumströmung mit einem Kühlmediumdruck vorgesehen ist. In Bezug auf die Figuren 2 der europäischen Anmeldungen wird erläutert, dass in einem Kühlkanalsystem von Schaufelstufe zu Schaufelstufe das Kühlmedium durch Strömungswiderstände gedrosselt werden kann, wobei sich beispielsweise eine Bohrung als Strömungswiderstand eignet. Bei der Drosselung wird der Druck ohne Verrichtung technischer Arbeit reduziert. Diese Art eines Strömungswiderstandes erweist sich aufgrund der fest eingestellten Geometrie einer Bohrung als schlecht anpassbar an unterschiedliche Betriebszustände, z. B. Teillasten.

Soweit die übrigen oben genannten Dokumente überhaupt eine aktive Kühlung offenbaren, erweist sich diese im Einzelnen als nicht ausreichend wirkungsvoll und in ihrer mechanischen Konstruktion als nachteilig.

Wünschenswert wäre eine konstruktiv einfache und gleichzeitig effiziente aktive Kühlung bei einem Dampfturbinen-Körper der eingangs genannten Art.

An dieser Stelle setzt die Erfindung an, deren Aufgabe es ist, einen Dampfturbinen-Körper, eine Dampfturbine und ein Verfahren zur Kühlung einer Dampfturbine sowie eine Verwendung anzugeben, bei der insbesondere das Kühlkanalsystem mechanisch vorteilhaft und gleichzeitig in seiner Kühlwirkung effizient und flexibel ausgelegt ist.

Bezüglich des Dampfturbinen-Körpers wird diese Aufgabe erfindungsgemäß dadurch gelöst, dass im Kühlkanalsystem wenigstens ein Strömungswiderstand in Form einer Druckminderungseinrichtung angeordnet ist, die selbstregelnd ist und ausgelegt ist, entlang der Längsrichtung den Kühlmediumdruck über dem Strömungsdruck zu halten.

Auf diese Weise wird nämlich garantiert, dass der strömungsnahe Bereich des Dampfturbinen-Körpers ständig mit Kühlmedium beaufschlagt ist. Um dabei eine besonders zuverlässige und bedarfsgerechte Kühlwirkung zu erzielen, sind die Kühlkanäle vorteilhafterweise vergleichsweise oberflächennah an der Innenoberfläche des Gehäusemantels geführt. Dem liegt die Erkenntnis zugrunde, dass gerade bei der Führung vergleichsweise heißen Strömungsmediums im Strömungskanal die thermische Belastung an einer Oberfläche des Dampfturbinen-Körpers besonders hoch ist. Eine besonders bedarfsgerechte Kühlung ist somit erreichbar, indem der jeweilige Kühlkanal vorteilhafterweise innerhalb einer Wand des jeweiligen Dampfturbinen-Körpers relativ zur Mittelebene der Wand in Richtung zur Oberfläche, also zur den Strömungskanal begrenzenden Oberfläche, hin versetzt positioniert ist.

Vorzugsweise ist das Kühlkanalsystem im Dampfturbinen-Körper integriert. Dabei kann das Kühlkanalsystem beispielsweise durch Hohlräume und/oder Kanäle im Körper selbst gebildet sein. Vorzugsweise kann das Kühlkanalsystem auch durch Abschirmbleche oder -elemente und den Körper selbst gebildet sein, indem die Abschirmbleche oder -elemente beabstandet vom Körper am Körper angebracht sind und ein Kühlkanalsystem in Form der durch die Beabstandung gebildeten Kanäle und Hohlräume gebildet ist.

Gemäß der Erfindung ist in einem solchen Kühlkanalsystem ein Strömungswiderstand in Form einer Druckminderungseinrichtung angeordnet, die vorliegend selbstregelnd ausgelegt ist. Es handelt sich dabei also um eine Einrichtung, die von einer bloßen in der EP-A 1 452 688 und EP-A 1 445 427 beschriebenen Bohrung unterschiedlich ausgelegt ist und über diese hinausgeht, da sie zusätzlich eine flexible Funktionalität aufweist, während eine bloße Drosselbohrung geometrisch fest ist. Unter einer selbstregelnden Druckminderungseinrichtung wird vorliegend eine Einrichtung verstanden, die den Druck als Folge eines Wechselspiels zwischen einer Kraft und einer Gegenkraft regelt. Die Kraft wird auf die Druckminderungseinrichtung vorliegend durch die Kühlmediumströmung und/oder die Hauptströmung des Arbeitsmediums eingebracht. Es kann sich also insbesondere um eine von Kühlmediums- und Hauptströmung differenzdruckbeaufschlagte Druckminderungseinrichtung handeln. Außerdem kann auch lediglich von einer Kühlmediumströmung oder Hauptströmung allein druckbeaufschlagte Druckminderungseinrichtung vorgesehen sein. Die Gegenkraft kann vorzugsweise in Form einer Vorspannung der Druckminderungseinrichtung voreingestellt werden. Eine solche Voreinstellung kann je nach Positionierung der Druckminderungseinrichtung an einer Position entlang der Längsrichtung unterschiedlich ausfallen, da auch der Kühlmediumdruck entlang der Längsrichtung im Kühlkanalsystem abnimmt - ähnlich wie auch der Strömungsdruck des Arbeitsmediums entlang der Längsrichtung des Dampfturbinen-Körpers abnimmt. Bei einer Mehrzahl von Druckminderungseinrichtungen ist also eine solche Vorspannung eingangsseitig besonders hoch und ausgangsseitig niedriger einzustellen - sie ist also entlang der Längsrichtung in abnehmendem Maße voreinzustellen.

Eine auf solche Weise ausgelegte Anzahl von selbstregelnden Druckminderungseinrichtungen vermag entlang der Längsrichtung den Kühlmediumdruck über dem Strömungsdruck zu halten.

Eine solche speziell für die Funktion der Druckminderung ausgestaltete Druckminderungseinrichtung ermöglicht es vorteilhafterweise einen praktisch optimalen Kühlmediumdruck zu erreichen. Gewisse Nachteile, wie sie durch in der EP 1 452 688 und EP 1 445 427 beschriebene Maßnahmen, wie Bohrungen mit fester Geometrie, zustande kommen, werden vermieden. Insbesondere kann sich die vorliegend beschriebene Druckminderungseinrichtung flexibel auf unterschiedliche Betriebszustände einstellen. Beispielsweise kann bei einer bei Teillast betriebenen Dampfturbine die Temperaturabnahme im Arbeitsmedium im Verlaufe seiner Expansion weniger stark sein als bei einer bei Volllast betriebenen Dampfturbine. Bei Teillast ermöglicht es das hier beschriebene Konzept beispielsweise vergleichsweise mehr Kühlmedium in einen hinteren Teil der Dampfturbine zu verlagern, insbesondere in den hinteren Expansionsbereich des Arbeitsmediums. Damit wird die Hauptkühllast im Teillastbetrieb praktisch in den hinteren Teil der Dampfturbine verlagert. Ebenso kann vergleichsweise mehr Kühlmedium bzw. eine Hauptkühllast vom Anfang auf die Mitte eines Expansionsbereichs eines Arbeitsmediums verlagert werden. Dies wird insbesondere durch die selbstregelnde Auslegung und/oder Anordnung einer Anzahl von Druckminderungseinrichtungen erreicht. Insbesondere sind eine Anzahl von selbstregelnden Druckminderungseinrichtungen im Kühlkanalsystem derart ausgelegt und/oder angeordnet, dass Kühlmedium einer Kühlmediumströmung abhängig vom Betriebszustand einer Dampfturbine in dem Kühlkanalsystem in einer Richtung entlang oder entgegen der Hauptströmung umlagerbar ist.

Das Kühlkanalsystem weist einen Hauptkühlkanal auf, der sich in Längsrichtung über eine Ausdehnung wenigstens einer Schaufelreihe erstreckt. Des Weiteren weist das Kühlkanalsystem einen Zweigkühlkanal auf, der vom Hauptkühlkanal abzweigt und zum Strömungskanal offen ist. Auf diese Weise lässt sich nämlich ein besonders effizientes und vorteilhaft gleichzeitig oberflächennahes im Körper integriertes Kühlkanalsystem mit möglichst großer der Körperform angepasster Kühloberfläche realisieren. Eine Druckminderungseinrichtung kann auch in einem Zweigkühlkanal angeordnet sein.

Bei dem so aufgebauten Kühlkanalsystem sind eine oder mehrere Druckminderungseinrichtungen im Hauptkühlkanal angeordnet. Bei jedem Hauptkühlkanal kann beispielsweise für jede Schaufelreihe und/oder Schaufelstufe jeweils eine Druckminderungseinrichtung vorgesehen sein. Gemäß einer besonders vorteilhaften Ausführungsform geht der Zweigkühlkanal von der Druckminderungseinrichtung aus. Alternativ oder zusätzlich könnte eine Druckminderungseinrichtung darüber hinaus auch zwischen zwei Zweigkühlkanälen im Hauptkühlkanal angeordnet sein.

Vorteilhafte Weiterbildungen der Erfindung sind den Unteransprüchen zu entnehmen und geben im Einzelnen vorteilhafte Möglichkeiten an, das Kühlkanalsystem einerseits und die Druckminderungseinrichtung andererseits, im Rahmen oben erläuterter Aufgabe hinsichtlich weiterer Vorteile zu realisieren.

Hinsichtlich der Druckminderungseinrichtung erweist es sich als besonders vorteilhaft, diese in Form eines vorzugsweise gegen die Kühlmediumströmung federbelasteten Kugelventils zu bilden.

In einer alternativen Ausführungsform erweist es sich als vorteilhaft, die Druckminderungseinrichtung in Form eines vorzugsweise gegen die Kühlmediumströmung vorgespannten Schiebers auszubilden. Der Schieber kann insbesondere differenzdruckbeaufschlagt sein. Der Differenzdruck kann dabei vorteilhaft von Kühlmediumströmung und Hauptströmung gebildet sein.

Beide Weiterbildungen sind in Form einer besonders bevorzugten Ausführungsform im Zusammenhang mit der Zeichnung im Detail beschrieben.

Gemäß einer Weiterbildung des so aufgebauten Kühlkanalsystems erweist es sich als vorteilhaft, dass der Körper eine Anzahl von, mehrere Schaufeln aufweisende, in Längsrichtung hintereinander angeordnete Schaufelreihen trägt, die sich jeweils in den Strömungskanal erstrecken und wobei der Zweigkühlkanal einen eine Schaufelreihe umgebenden Ringkanal aufweist. Dazu könnte beispielsweise zunächst ein Stichkühlkanal von einem Hauptkühlkanal auf einen Ringkanal führen. Ein solcher Ringkanal ist vorzugsweise pro Schaufelreihe an der Position einer Schaufelreihe vorgesehen, insbesondere direkt unterhalb der Verankerung eines Schaufelfußes einer Schaufel der Schaufelreihe. Insbesondere verläuft ein Ringkanal im Rotor innerhalb einer Laufschaufelreihe. Insbesondere umgibt ein Ringkanal im Gehäuse eine Leitschaufelreihe.

Gemäß noch einer Weiterbildung eines derart aufgebauten Kühlkanalsystems weist der Zweigkühlkanal einen oder mehrere von einem Ringkanal ausgehende Schaufelkanäle auf, die in eine, eine Anzahl oder alle Schaufeln einer Schaufelstufe führen.

Gemäß dieser Weiterbildung wird also ein Kühlmedium parallel zur Expansion einer Hauptströmung schrittweise durch speziell dafür vorgesehene Einrichtungen gedrosselt sowie einzelnen oder mehreren Schaufelreihen und/oder Schaufelstufen zugeführt zur Kühlung einer jeweiligen Schaufel. Das Kühlmedium kann dabei vorzugsweise in Form von Dampf oder bei einigen Anwendungen ggf. auch in Form von Wasser von externer Seite dem Kühlkanalsystem zugeführt werden. Beispielsweise kann Kühlmedium in Form von Dampf dem Dampfkreislauf auf geeignete Weise entnommen werden.

Gemäß dieser Weiterbildung tritt das Kühlmedium durch hohl gebohrte oder durch hohl gegossene Schaufeln vorteilhaft in einen Bereich oberhalb des Schaufelkopfes. Zusätzlich können weitere Öffnungen in einer Schaufel vorgesehen sein, um einen Kühlmediumsaustritt zu ermöglichen und um damit eine Oberflächenkühlung in Form einer Filmkühlung auf der Schaufeloberfläche bereitzustellen. Insbesondere kann das Kühlmedium auch an einer Stelle des Dampfturbinenkörpers austreten, an der keine Schaufelreihe angeordnet ist. Vorteilhaft ist dabei jede zweckmäßig zu kühlende Bauteiloberfläche kühlbar. Beispielsweise ist dadurch ein Dichtungsbereich zwischen einem Dampfturbinenkörper und einer Schaufelreihe kühlbar.

Mit dieser Form der Weiterbildung ist eine übermäßige Druckbeanspruchung der besonders zu kühlenden Bauteile in Form der Schaufeln durch ein nicht druckangepasstes Medium vermieden. Gleichzeitig ist ein vorbestimmter, erforderlicher Differenzdruck zur Sicherstellung eines ausreichenden Kühlmassenstroms durch die selbstregelnden Druckminderungseinrichtungen garantiert. Denn das Kühlmedium wird bei dieser Weiterbildung von den Druckminderungseinrichtungen aus in Kühlkanäle geleitet, an die einige oder alle Schaufeln einer Schaufelstufe angeschlossen sind.

Dabei kann das hier vorgeschlagene Kühlkanalsystem mechanisch vorteilhaft und gleichzeitig effizient und flexibel ausgebildet sein, da fest vorzugebende konstruktive und geometrische Maßnahmen zur Drosselung des Kühlmediums vermieden sind. Statt dessen wird gemäß dem vorgelegten Konzept eine Anzahl von selbstregelnden Druckminderungseinrichtungen verwendet.

Aus Gründen gleichmäßiger Verformung eines thermisch beanspruchten Dampfturbinen-Körpers ist eine symmetrische Anordnung des Kühlkanalsystem, insbesondere der erwähnten Hauptkühlkanäle, Stichkühlkanäle und Schaufelkühlkanäle, insbesondere in Bezug auf den Ringkühlkanal, vorzuziehen. In dem Fall lassen sich die Druckminderungseinrichtungen des Kühlkanalsystems in ihrer Funktion besser den Erfordernissen der unterschiedlichen Kühlanforderungen bei Teillasten anpassen. Eine solche Anpassung wäre bei einem lediglich konstruktiv und damit mit fester Geometrie vorgegebenen Kühlkanalsystem nicht möglich.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in:
- FIG 1: eine schematisierte Darstellung eines Kühlkanalsystems mit selbstregelnden Druckminderungseinrichtungen bei einem Dampfturbinen-Gehäuse gemäß einer bevorzugten Ausführungsform;
- FIG 2: eine schematisierte Darstellung eines Kühlkanalsystems mit selbstregelnden Druckminderungseinrichtungen bei einem Dampfturbinen-Rotor gemäß einer bevorzugten Ausführungsform;
- FIG 3: eine Darstellung einer Zuführung eines Kühlmediums und der Weiterleitung des Kühlmediums in einem im Dampfturbinen-Körper integrierten, oberflächennahen Kühlkanalsystem im Beschaufelungsbereich für eine bevorzugte Ausführungsform eines Dampfturbinen-Gehäuses oder -Rotors;
- FIG 4: eine Detaildarstellung einer Druckminderungseinrichtung in Form eines gegen die Kühlmediumströmung federbelasteten Kugelventils bei einer der besonders bevorzugten Ausführungsformen der FIG 1 bis 3, wobei das Kugelventil öffnet, wenn ein Grenzdruck überschritten wird;
- FIG 5: eine Detaildarstellung einer Druckminderungseinrichtung in Form eines gegen die Kühlmediumströmung federbelasteten Kugelventils bei einer der besonders bevorzugten Ausführungsformen der FIG 1 bis 3, wobei das Kugelventil schließt, wenn ein Grenzdruck überschritten wird;
- FIG 6: eine Detaildarstellung einer selbstregelnden Druckminderungseinrichtung in Form eines differenzdruckbeaufschlagten, vorgespannten Schiebers bei einer der bevorzugten Ausführungsformen der FIG 1 bis 3;
- FIG 7: ein Diagramm für eine beispielhafte Schaltungsart von Kugelventilen in einem Hauptkühlkanal bei einer der besonders bevorzugten Ausführungsformen der FIG 1 bis FIG 3;
- FIG 8: ein Diagramm für eine beispielhafte Schaltungsart von Kugelventilen in Nebenkühlkanälen bei einer besonders bevorzugten Ausführungsform der FIG 1 bis FIG 3.

FIG 1 zeigt eine Hochtemperatur-Dampfturbine 10 gemäß einer besonders bevorzugten Ausführungsform. Sie kann mit einem Arbeitsmedium in Form einer Hauptströmung 17 mit Parametern für Druck p, z. B. bei 250 bar und einer Temperatur oberhalb von 540 °C, oder z. B. gemäß dem "Neft"-Artikel, beaufschlagt werden. Die Dampfturbine 10 weist einen Rotor 1 mit einer Anzahl von daran angebrachten Rotor- oder Laufschaufeln auf, die in so genannten Laufschaufelreihen 3 hintereinander angeordnet sind. Die Laufschaufelreihen 3 sind drehbar in einem Gehäuse 5, das eine Anzahl von Leitschaufelreihen 7 aufweist und sich dabei entlang einer axialen Ausdehnung entlang einer Achse 9, also in Längsrichtung erstreckt. Die drehbaren Laufschaufelreihen 3 greifen dabei wie Finger in Zwischenräume zwischen die stationären Leitschaufelreihen 7.

Das in FIG 1 dargestellte Gehäuse 5 ist als eine besonders bevorzugte Ausführungsform eines Dampfturbinen-Körpers gemäß dem Konzept der Erfindung ausgeführt. Das Gehäuse 5 könnte auch als ein Innengehäuse oder als ein Leitschaufelträger ausgebildet sein und/oder in der Art einer segmentierten Bauweise von einer Anzahl von Gehäusesegmenten gebildet sein. Das Gehäuse 5 weist eine Innenwandung 11 und eine Außenwandung 13 auf. Mit der Innenwandung begrenzt das Gehäuse 5 einen Strömungskanal 15, der zur Aufnahme einer Hauptströmung 17 eines fluiden Arbeitsmediums mit einem Strömungsdruck vorgesehen ist. Die in Längsrichtung hintereinander angeordneten Leitschaufelreihen 7 erstrecken sich jeweils in den Strömungskanal 15. Das Gehäuse 5 weist ein zum Strömungskanal 15 offenes im Gehäuse 5 integriertes Kühlkanalsystem 19 zur Aufnahme einer Kühlmediumströmung mit einem Kühlmediumdruck auf. In dem Kühlkanalsystem 19 ist an der einer Laufschaufelreihe 3 gegenüberliegenden Position jeweils eine Druckminderungseinrichtung 21 angeordnet. Die Druckminderungseinrichtung 21 ist selbstregelnd ausgelegt und in der Lage entlang der Längsrichtung 9 den Kühlmediumdruck p über dem Strömungsdruck P zu halten.

Der Kühlmediumdruck ist vorliegend durch die in ihrer Höhe infolge abnehmenden Drücke p₁>p₂>p₃ gekennzeichnet. Ebenso ist der Strömungsdruck durch die in ihrer Folge abnehmenden Drücke P₁>P₂>P₃ gekennzeichnet. Im Übrigen ist vorliegend jede selbstregelnde Druckminderungseinrichtung 21 so ausgelegt, dass p₁>P₁ und p₂>P₂ und p₃>P₃ gilt, d. h. entlang der Längsrichtung 9 ist der Kühlmediumdruck der Kühlmediumströmung über dem Strömungsdruck der Hauptströmung 17 gehalten. Ein Verhältnis des Kühlmediumdrucks p zum Strömungsdruck P ist größer als 1.0 und kann bis 1.5 betragen. Vorteilhaft ist das Verhältnis größer als 1.1 und kann bis zu 1.25 betragen.

Das in der FIG 1 gezeigte Kühlkanalsystem 19 weist einen Hauptkühlkanal 23 auf, der sich in Längsrichtung 9 über alle Schaufelreihen 3, 7 erstreckt. Im Übrigen weist das Kühlkanalsystem 19 auch pro Leitschaufelstufe 7 einen Zweigkühlkanal 25 auf, der vom Hauptkühlkanal 23 abzweigt und zum Strömungskanal 15 hin offen ist.

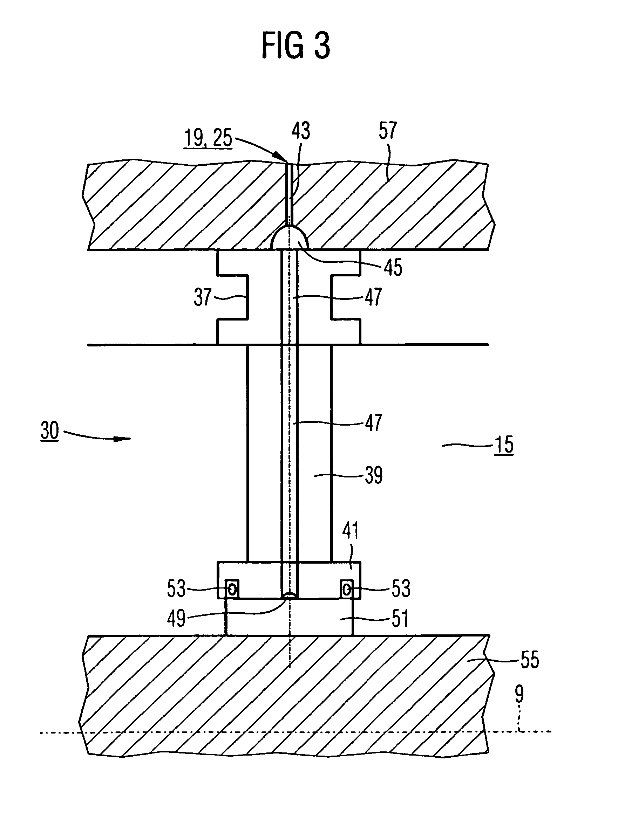

Die detaillierte Ausführung des Kühlkanalsystems 19 im Bereich einer Schaufelstufe 3, 7 wird im Detail in der FIG 3 gezeigt.

FIG 2 zeigt eine weitere besonders bevorzugte Ausführungsform einer Hochtemperatur-Dampfturbine 20, die mit Dampf als Arbeitsmedium bei einem Druck oberhalb von 250 bar und einer Temperatur oberhalb von 540 °C beaufschlagt wird oder in Abwandlungen mit Dampfparametern gemäß dem "Neft"-Artikel.

In der FIG 2 sind Merkmale gleicher Funktion mit den gleichen Bezugszeichen wie in FIG 1 benannt, auch wenn sie im Einzelnen bei der Ausführungsform der FIG 2 im Unterschied zur Ausführungsform der FIG 1 unterschiedlich ausgeführt sind. Dies betrifft insbesondere das Kühlkanalsystem 19 mit dem Hauptkühlkanal 23, den Zweigkühlkanälen 25 und den Druckminderungseinrichtungen 21.

Das Kühlkanalsystem 19 ist gemäß der Ausführungsform der FIG 2 in einem Rotor 31 als besondere Ausführungsform eines Dampfturbinen-Körpers integriert und übernimmt im Wesentlichen die gleichen Funktionen wie das in Bezug auf die FIG 1 erläuterte Kühlkanalsystem. Dementsprechend gelten auch die für die Drücke p₁>p₂>p₃ sowie P₁>P₂>P₃ erläuterten Verhältnisse, auch wenn die Drücke nunmehr an unterschiedlicher Stelle auftreten.

Vorliegend begrenzt der Rotor 31 mit seiner Außenwandung 33 den Strömungskanal 15. Allerdings sind diesmal die Laufschaufelreihen 35 im Unterschied zu den Laufschaufelreihen 3 der FIG 1 mit dem Kühlkanalsystem 19, und dabei insbesondere mit den Zweigkühlkanälen 25 ausgelegt. Im Übrigen weisen im Unterschied zu der FIG 1 vorliegend die Leitschaufelreihen 27 des Gehäuses 29 keine Kühlkanäle auf.

Ähnlich wie die Drücke p und P verhalten sich in der Regel auch die Temperaturen t des Kühlmediums und T des Arbeitsmediums. Das heißt, jedem Druck p ist eine entsprechende Temperatur t und jedem Druck p ist eine entsprechende Temperatur T zugeordnet. Auch für die Temperaturen gilt hier t₁>t₂>t₃ und T₁>T₂>T₃ .

Auch wenn in der Ausführungsform der FIG 1 lediglich das Dampfturbinengehäuse als besonders bevorzugte Ausführungsform eines Dampfturbinen-Körpers ausgelegt ist und in der Ausführungsform der FIG 2 lediglich der Dampfturbinenrotor als besonders bevorzugte Ausführungsform des Dampfturbinen-Körpers ausgelegt ist, so kann dennoch in einer weiteren hier nicht gezeigten Ausführungsform einer Hochtemperatur-Dampfturbine ein Dampfturbinengehäuse und ein Dampfturbinenrotor gleichermaßen ein Kühlkanalsystem 19, wie es jeweils in den FIG 1 und 2 gezeigt ist, aufweisen.

Die Detailzeichnung der FIG 3 zeigt im Einzelnen eine Dampfturbinenschaufel 30, wie sie als Leitschaufel bei der Dampfturbine 10 mit dem Gehäuse 5 als besonders bevorzugte Ausführungsform eines Dampfturbinen-Körpers Verwendung finden kann. Im Übrigen vermag die hier gezeigte Detailzeichnung einer Dampfturbinenschaufel 30 im Wesentlichen auch eine Laufschaufel bei einem Rotor 31 als besonders bevorzugte Ausführungsform eines Dampfturbinen-Körpers der Dampfturbine 20 der FIG 2 darstellen.

Die Schaufel 30 weist einen Schaufelfuß 37, ein Schaufelblatt 39 und einen Schaufelkopf 41 auf. Der Schaufelkopf 41 ist vorliegend in Form einer Deckplatte ausgebildet. Das Kühlkanalsystem 19 ist vorliegend außerhalb seines Hauptkühlkanals 23 lediglich mit seinem Zweigkühlkanal 25 gezeigt. Der Zweigkühlkanal weist einen Stichkanal 43 auf, der in einen Ringkanal 45 mündet, wobei der Ringkanal 45 eine Schaufelreihe, dessen Teil die Schaufel 30 ist, umgibt. Entlang des Umfangs der Schaufelreihe können mehrere Hauptkühlkanäle 23 angeordnet sein, von denen dann vorteilhaft jeweils ein Stichkanal 43 oder mehrere Stichkanäle 43 zum Ringkanal 45 abzweigen. Letztere sind somit Teil eines Zweigkühlkanals 25. Die Anordnung ist vorzugsweise symmetrisch zur Längsrichtung 9, um thermische Ausdehnungen beim Dampfturbinen-Körper gleichmäßig zu verteilen.

Der Ringkanal 45 ist direkt unterhalb des Schaufelfußes 37 gebildet. Der Ringkanal 45 setzt sich in Form eines Schaufelkanals 47 zunächst in den Schaufelfuß 37 und dann in das Schaufelblatt 39 fort. Es vermag je nach Anwendung eine, mehrere oder alle Schaufeln 30 einer Schaufelstufe einen hier gezeigten Schaufelkanal 47 aufweisen. Der Schaufelkanal 47 weist eine Öffnung 49 auf, die das Kühlkanalsystem 19 zum Strömungskanal 15 öffnet. Die Öffnung 49 mündet dabei in einen Bereich in unmittelbarer Nähe eines Kopfes 41 der Schaufel 30. Das Kühlkanalsystem 19 bzw. der Zweigkühlkanal 25 ist somit über den Stichkanal 43, den Ringkanal 45, den Schaufelkanal 47 und die Öffnung 49 im Bereich 51 zum Strömungskanal 15 offen.

Im vorliegenden Fall zeigt die Ausführungsform der FIG 3 eine Leitschaufel, wobei der Bereich 51 in Form eines Dichtungsbereiches gebildet ist, der eine Dichtung 53 zur Abdichtung des Schaufelkopfes 41 gegen einen Rotor 55 bildet. In dem Fall stellt der schraffierte Bereich 57 das Gehäuse dar. Kühlort ist dabei also eine Wellendichtung. Dadurch wird eine Abschirmung des an den Bereich 51 grenzenden Bauteils, vorliegend ist das der Rotor 55, erreicht.

Für denn Fall, dass die Schaufel 30 eine Laufschaufel darstellen würde, würde der schraffierte Bereich 57 den Rotor darstellen und der nicht schraffierte Bereich 55 das Gehäuse.

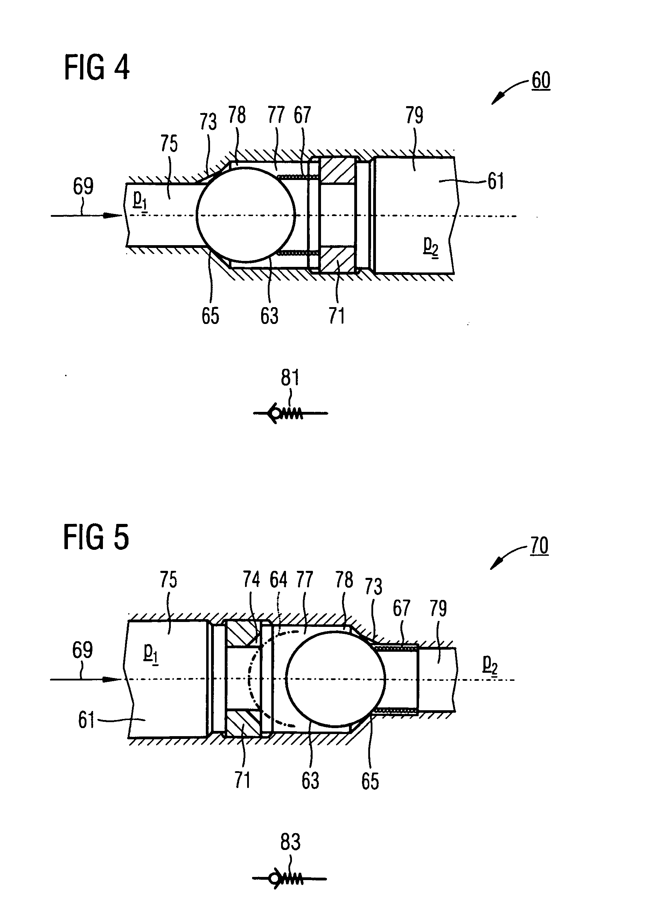

In den FIG 4 bis 8 sind beispielhafte Detaildarstellungen 60, 70, 80 und Schaltungsarten 90, 100 von selbstregelnden Druckminderungseinrichtungen 21 dargestellt, wie sie bei einer besonders bevorzugten Ausführungsform der FIG 1 bis 3 Verwendung finden können. Selbstregelnde Druckminderungseinrichtungen 21 weisen vor allem den Vorteil auf, dass sie, insbesondere ohne einen Eingriff von außen, sich auf die unterschiedlichen Kühlanforderungen bei verschiedenen Lastfällen einer Dampfturbine, also insbesondere bei Volllast, Teillast oder Schwachlast, selbsttätig einstellen können.

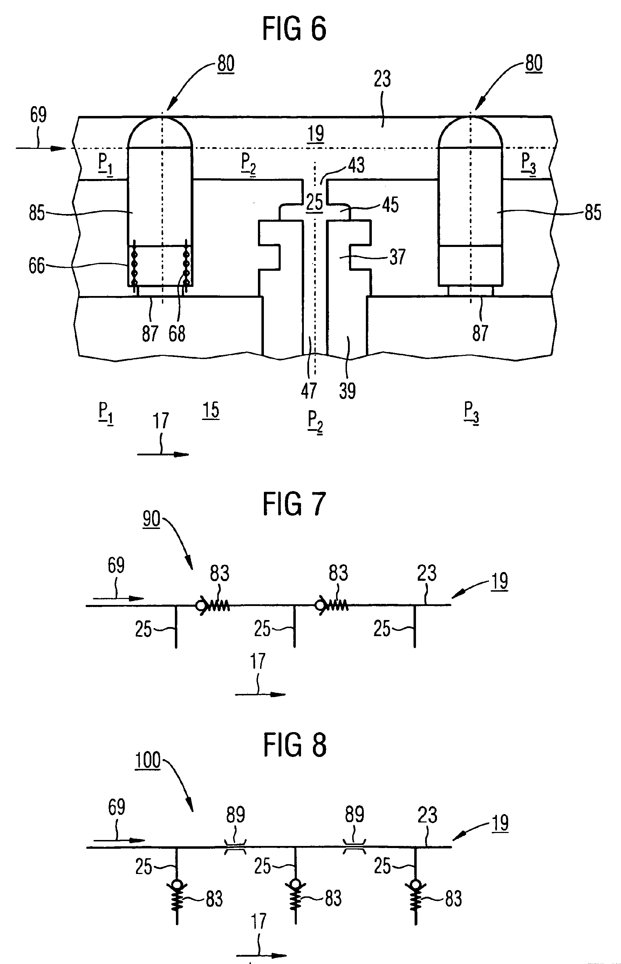

Das ist insbesondere im Rahmen der im Folgenden erläuterten Kühlanforderungen vorteilhaft. Bei Volllast nimmt die Temperatur einer Hauptströmung 17 nämlich im Verlauf der Expansion eines Arbeitsmediums stark ab. Kühlbedarf besteht deshalb insbesondere im vorderen Teil des Expansionsbereiches des Arbeitsmediums im Strömungskanal 15. Bei Teillast oder Schwachlast stellt sich dagegen eine geringere Absenkung der Temperatur ein, was insbesondere aufgrund von Ventilation erfolgt. Das heißt, bei gleichbleibender Eintrittstemperatur sollte bei Teillast oder Schwachlast ein ausgedehnterer Bereich im Vergleich zur Volllast gekühlt werden. In dem Zusammenhang lässt sich insbesondere eine Schaltungsanordnung einer Anzahl selbstregelnder Druckminderungseinrichtungen 21 im Kühlkanalsystem 19 derart anordnen, dass eine Kühlmediumströmung abhängig vom Betriebszustand einer Dampfturbine 10, 20 in dem Kühlkanalsystem 19 in einer Richtung entlang oder entgegen der Hauptströmung 17 umlagerbar ist. Dafür beispielhafte Schaltungsarten sind in den FIG 7 und 8 erläutert.

FIG 4 zeigt ein erstes Beispiel einer Druckminderungseinrichtung 60 der oben erläuterten Art. Die Detaildarstellung zeigt die Druckminderungseinrichtung 60 in einem Kühlkanal 61, der ein Hauptkühlkanal 23 oder ein Zweigkühlkanal 25 eines Kühlkanalsystems 19 sein kann und der vorliegend mit dem Bezugszeichen 61 bezeichnet ist. Die Druckminderungseinrichtung 60 in Form eines Kugelventils ist gebildet durch eine Kugel 63, einen Sitzbereich 65 für die Kugel 63 sowie eine Feder 67, um die Kugel gegen die durch eine Kühlmittelströmung 69 aufgebrachte Kraft vorzuspannen. Die Feder 67 ist gegen einen Gewindering 71 abgestützt, wobei der Gewindering 71 in den Kühlkanal 61 eingeschraubt ist. Im Sitzbereich 65 der Kugel 63 ist, im Übrigen optional, eine Öffnung 73 vorgesehen, die es selbst bei festem Sitz der Kugel 63 im Sitzbereich erlaubt, eine Mindestdurchflussmenge des Kühlmediums 69 durch das Kugelventil 60 zu erlauben. Die Öffnung 73 definiert also einen Mindestquerschnitt für den Kühlkanal 61 im Bereich der Druckminderungseinrichtung 60. Vor dem Sitzbereich 65 der Kugel 63 herrscht ein Druck p₁ im Kühlkanal 61. Hinter der Druckminderungseinrichtung 60 herrscht ein Druck p₂. Dabei ist der Druck p₁ größer als der Druck p₂, so dass über die Druckminderungseinrichtung 60 ein Druckabfall Δp = p₁ - p₂ herrscht. Die Druckminderungseinrichtung 60 funktioniert in der Weise, dass die Kugel 63 öffnet, sobald ein bestimmter Druckabfall Δp überschritten wird. Dieser bestimmte Druckabfall Δp lässt sich durch die Federkraft der Feder 67 und die Auslegung des Querschnitts des Kühlkanals 61 im Bereich der als Kugelventil ausgelegten Druckminderungseinrichtung 60 voreinstellen. Dafür maßgeblich sind im Wesentlichen der Öffnungsquerschnitt 75 und der Kreisringquerschnitt 78 zwischen Kugel und Bohrwandung und der Öffnungsquerschnitt 77 des Kühlkanals 61. Vor dem Öffnen der Druckminderungseinrichtung 60 besteht ein freier Mindestquerschnitt, der durch die Öffnung 73 im Sitzbereich 65 der Kugel 63 definiert ist. Der Sitzbereich ist vorteilhafterweise hartstoffbeschichtet oder in sonstiger Weise gepanzert, was die Beständigkeit des Sitzbereichs 65 erhöht.

Unter der Detaildarstellung der Druckminderungseinrichtung 60 ist das Symbol eines hier gezeigten öffnenden Kugelventils 81 dargestellt.

FIG 5 zeigt eine nach dem gleichen Wirkprinzip funktionierende Druckminderungseinrichtung 70 in Form eines schließenden Kugelventils 83, dessen Symbol unter der Detaildarstellung gezeigt ist. Im Übrigen sind für Teile gleicher Funktion der Druckminderungseinrichtung 60 der FIG 4 und der Druckminderungseinrichtung 70 der FIG 5 die gleichen Bezugszeichen verwendet worden. Die Detaildarstellung zeigt die Kugel 63 in einer Verschlusslage, d. h. nach Überschreiten einer bestimmten Druckdifferenz Δp = p₁ - p₂. Das heißt, die Kugel 63 befindet sich bei der Detaildarstellung in einer Verschlusslage, bei der der Kühlkanal 61 bis auf einen, im Übrigen optionalen, Mindestquerschnitt 73 verschlossen ist. Die Voreinstellung der Druckminderungseinrichtung hinsichtlich des Druckabfalls Δp erfolgt unter Berücksichtigung der Federkraft der Feder 67 sowie des Öffnungsquerschnitts 77, des Kreisringquerschnitts 78 zwischen Kugel und Bohrwandung und des Öffnungsquerschnitts 79 des Kühlkanals 61. Die Detaildarstellung zeigt außerdem angedeutet eine Ruhelage 64 der Kugel 63. In der Ruhelage 64 ist der Kühlkanal 61 im Bereich von relativ groß gehaltenen Überströmöffnungen 74 geöffnet. Sobald also eine bestimmte Druckdifferenz Δp überschritten wird, wird die Kugel 63 von ihrer Ruhelage 64 in ihre in der Detaildarstellung gezeigt Lage gegen die Kraft der Feder 67 bewegt, wobei die Feder 67 zusammengedrückt wird. In dem Zustand ist die Druckminderungseinrichtung 70 bis auf den Mindestquerschnitt 73 geschlossen. Aus diesem Grund wird die in FIG 5 gezeigt Druckminderungseinrichtung 70 als schließendes Kugelventil 83 bezeichnet.

FIG 6 zeigt eine Detaildarstellung einer Druckminderungseinrichtung 80 in einem Kühlkanalsystem 19. Letzteres in den FIG 1 bis 3 erläutertes Kühlkanalsystem ist durch einen oder eine Anzahl von Hauptkühlkanälen 23, einen oder eine Anzahl von Zweigkühlkanälen 25 und einen oder eine Anzahl von Zweigkühlkanälen 25 und einen oder eine Anzahl von Ringkanälen 45 gebildet. Insbesondere ist der Zweigkühlkanal 25 durch einen Stichkanal 43 und durch den Ringkanal 45 gebildet. Der Ringkanal setzt sich in einen Schaufelkanal 47 fort, der vorliegend einen Schaufelfuß 37 und ein Schaufelblatt 39, ähnlich wie in FIG 3 gezeigt, durchsetzt. Außer zur Kühlung einer Schaufel kann das Kühlkanalsystem 19 auch zur Kühlung anderer geeigneter Kühlorte dienen.

Im Kühlkanalsystem 19 ist eine Anzahl von Druckminderungseinrichtungen jeweils in Form eines differenzdruckbeaufschlagten Schiebers 85 angeordnet, der in einem Sitzbereich 66 gegen eine Feder 68 verschiebbar gelagert ist. Der Bereich der Druckminderungseinrichtung 80 ist durch eine Öffnung 87 zum Strömungskanal 15 offen, wobei der Strömungskanal 15 die Hauptströmung 17 führt. Damit stehen jeweils den Kühlmediumdrücken p₁>p₂>p₃ Strömungsdrücke P₁>P₂>P₃ gegenüber. Am Schieber 85 greift also eine Druckdifferenz an, die durch P₁ einerseits und p₁ und p₂ andererseits gebildet wird. Eine Feder 68 ist auf der linken Seite der Detaildarstellung derart vorgespannt, dass der Schieber 85 den Hauptkühlkanal 23 gegen die Kühlmittelströmung 69 verschließt. Im Falle einer Teil-oder Schwachlast können die Drücke p im Kühlkanalsystem derart erhöht werden, dass die Druckminderungseinrichtung 60 im linken Teil der Detaildarstellung öffnet, während eine Druckminderungseinrichtung 80 im rechten Teil der Detaildarstellung verschlossen bleibt. Auf diese Weise kann Kühlmedium eine Kühlmediumströmung 69 abhängig vom Betriebszustand einer Dampfturbine 10, 20 in dem Kühlkanalsystem 19 in einer Richtung entlang der Hauptströmung 17 umgelagert werden. Durch eine Umkehr dieses Wirkprinzips kann ebenso Kühlmedium einer Kühlmediumströmung 69 abhängig vom Betriebszustand einer Dampfturbine 10, 20 in dem Kühlkanalsystem 19 in einer Richtung entgegen der Hauptströmung 17 umgelagert werden.

FIG 7 zeigt eine beispielhafte erste Schaltungsart 90 von schließenden Kugelventilen 83 in einer Kühlmittelströmung 69, die in einem Kühlkanalsystem 19 mit einem Hauptkühlkanal 23 und einem Zweigkühlkanal 25 geführt wird.

Die schließenden Kugelventile 83 schließen bis auf einen vorgegebenen Mindestquerschnitt nach dem in FIG 5 erläuterten Prinzip, wenn eine bestimmte Druckdifferenz erreicht wird. Dieses Verhalten kann vorteilhaft im Teillastbereich angewendet werden, wenn stromabwärts einer Hauptströmung 17 ein erhöhter Kühldampfmassenstrom 69 erforderlich ist. Im Teillastbereich ist dies nämlich dann der Fall, wenn bei einem kleiner ausfallenden Druckabfall in einer Hauptströmung 17 eine geringere Abkühlung im Verlaufe der Expansion eines Arbeitsmediums erfolgt.

FIG 8 zeigt eine zweite Schaltungsart 100 von schließenden Kugelventilen 83 in einem Kühlkanalsystem 19, das einen Hauptkühlkanal 23 und einen Zweigkühlkanal 25 aufweist. Die schließenden Kugelventile 83 sind dabei jeweils in einem Zweigkühlkanal 25 angeordnet. Das Kühlkanalsystem 19 führt eine Kühlmittelströmung 69.

Optional kann im Hauptkühlkanal 23 bei der hier vorliegenden Ausführungsform eine beliebige Drosseleinrichtung 89 vorgesehen sein. Bei der hier gezeigten zweiten Schaltungsart schließen die schließenden Kugelventile 83, wenn eine bestimmte Druckdifferenz Δp oder ein bestimmter Volumenstrom des Kühlmediums 69 im Kühlkanalsystem 19, insbesondere in einem Zweigkühlkanal 25 überschritten wird, bis auf einen Mindestquerschnitt nach dem in FIG 5 erläuterten Prinzip. Diese Art der zweiten Schaltung 100 weist den Vorteil auf, dass in einem Teillast- oder Schwachlastbetrieb einer Dampfturbine 10, 20 stromabwärts einer Hauptströmung 17 ein erhöhter Kühldampfmassenstrom 69 bereitgestellt werden kann. Im vorderen Bereich einer Hauptströmung schließen dann nämlich die schließenden Kugelventile 83, während sie im hinteren Bereich der Hauptströmung 17 geöffnet bleiben, so dass im Teillastbereich stromabwärts ein erhöhter Kühldampfmassenstrom 69 bereitgestellt wird. Das Schließverhalten wird dabei insbesondere auch durch die Druckunterschiede zwischen Kühlmediumströmung 69 und Hauptströmung 17 bestimmt.

Die Vorteile der in FIG 7 und 8 gezeigten Schaltungen ergeben sich aus der Regelung des Kühlmediumdruckes p im Teillast-und Schwachlastbereich. Im Falle der FIG 7 wird ein Kühlmediumdruck des Kühlmediums 69 dem Druck in der Hauptströmung 17 nachgeregelt. Im Falle der FIG 8 bleibt der Kühlmediumdruck einer Kühlmediumströmung 69 weitgehend konstant.

Ein Dampfturbinen-Körper, beispielsweise in Form eines Gehäuses 5 oder eines Rotors 31 begrenzt entlang einer Längsrichtung 9 einen Strömungskanal 15, der zur Aufnahme einer Hauptströmung 17 eines fluiden Arbeitsmediums mit einem Strömungsdruck P, P₁>P₂>P₃ vorgesehen ist. Der Körper trägt üblicherweise eine Anzahl von, mehrere Schaufeln aufweisende, in Längsrichtung 9 hintereinander angeordnete Schaufelreihen 7, 35 die sich jeweils in den Strömungskanal 15 erstrecken. Des Weiteren weist der Körper ein zum Strömungskanal 15 offenes, im Körper integriertes Kühlkanalsystem 19 zur Aufnahme einer Kühlmediumströmung mit einem Kühlmediumdruck p, p₁>p₂>p₃ auf. Um eine möglichst effiziente aktive Kühlung gleichzeitig mechanisch verträglich und flexibel zu gestalten, sieht das vorgelegte Konzept vor, dass im Kühlkanalsystem 19 wenigstens ein Strömungswiderstand in Form einer Druckminderungseinrichtung 21, 60, 70, 80 angeordnet ist, die selbstregelnd ist und ausgelegt ist, entlang der Längsrichtung 9 den Kühlmediumdruck p, p₁>p₂>p₃ über dem Strömungsdruck P, P₁>P₂>P₃ zu halten.

## Patentansprüche

1. Dampfturbinen-Körper (5, 31),
der entlang einer Längsrichtung (9) einen Strömungskanal (15) begrenzt, der zur Aufnahme einer Hauptströmung (17) eines fluiden Arbeitsmediums mit einem Strömungsdruck (P, P₁>P₂>P₃) vorgesehen ist, und
der ein zum Strömungskanal (15) offenes Kühlkanalsystem (19) zur Aufnahme einer Kühlmediumströmung mit einem Kühlmediumdruck aufweist,
wobei im Kühlkanalsystem (19) wenigstens ein Strömungswiderstand in Form einer Druckminderungseinrichtung (21, 60, 70, 80) angeordnet ist, die selbstregelnd ist und ausgelegt ist, entlang der Längsrichtung den Kühlmediumdruck (p, p₁>p₂>p₃) über dem Strömungsdruck (P, P₁>P₂>P₃) zu halten, **dadurch gekennzeichnet, dass**
das Kühlkanalsystem (19) einen Hauptkühlkanal (23) aufweist, der sich in Längsrichtung (9) über eine Ausdehnung wenigstens einer Schaufelreihe (7, 35) erstreckt, und
das-einen Zweigkühlkanal (25) aufweist, der vom Hauptkühlkanal (23) abzweigt und zum Strömungskanal (15) offen ist, wobei die Druckminderungseinrichtung (21) im Hauptkühlkanal (23) und/oder im Zweigkühlkanal (25) angeordnet ist.

2. Dampfturbinen-Körper nach Anspruch 1,
**dadurch gekennzeichnet, dass**
der Körper eine Anzahl von, mehrere Schaufeln (30) aufweisende, in Längsrichtung (9) hintereinander angeordnete Schaufelreihen (7, 35) trägt, die sich jeweils in den Strömungskanal erstrecken, und
der Zweigkühlkanal (25) einen eine Schaufelreihe (7, 35) umgebenden Ringkanal (45) aufweist.

3. Dampfturbinen-Körper nach Anspruch 1 oder 2,
**dadurch gekennzeichnet, dass**
der Zweigkühlkanal (25) einen oder mehrere von einem Ringkanal (45) ausgehende Schaufelkanäle (47) aufweist, die in eine, eine Anzahl oder alle Schaufeln (30) einer Schaufelreihe (7, 35) führen.

4. Dampfturbinen-Körper nach einem der Ansprüche 1 bis 3,
**dadurch gekennzeichnet, dass**
das Kühlkanalsystem (19) weitgehend symmetrisch um eine Zentralachse (9) angeordnet ist.

5. Dampfturbinen-Körper nach einem der Ansprüche 1 bis 4 in Form eines Dampfturbinen-Rotors (31).

6. Dampfturbinen-Körper nach Anspruch 5,
**dadurch gekennzeichnet, dass**
das Kühlkanalsystem (19) eine Öffnung (49) aufweist, die in einen Bereich (51) zwischen einem Kopf (41) einer Laufschaufel (30) und einem Dampfturbinen-Gehäuse (55) mündet.

7. Dampfturbinen-Körper nach einem der Ansprüche 1 bis 4 in Form eines Dampfturbinen-Gehäuses (5).

8. Dampfturbinen-Körper nach Anspruch 7,
**dadurch gekennzeichnet, dass**
das Kühlkanalsystem (19) eine Öffnung (49) aufweist, die in einen Dichtungsbereich (51) zwischen einem Kopf (41) einer Leitschaufel (30) und einem Dampfturbinen-Rotor (55) mündet.

9. Dampfturbinen-Körper nach einem der Ansprüche 1 bis 8,
**dadurch gekennzeichnet, dass**
die Druckminderungseinrichtung (21) in Form eines gegen die Kühlmediumströmung federbelasteten Kugelventils (60, 70) gebildet ist.

10. Dampfturbinen-Körper nach einem der Ansprüche 1 bis 8,
**dadurch gekennzeichnet, dass**
die Druckminderungseinrichtung (21) in Form eines vorgespannten Schiebers (80) gebildet ist.

11. Dampfturbinen-Körper nach einem der Ansprüche 1 bis 10,
**dadurch gekennzeichnet, dass**
eine Anzahl selbstregelnder Druckminderungseinrichtungen (21, 60, 70, 80) im Kühlkanalsystem (19) derart ausgelegt ist, dass Kühlmedium einer Kühlmediumströmung (69) abhängig vom Betriebszustand einer Dampfturbine (10, 20) in dem Kühlkanalsystem (19) in einer Richtung entlang oder entgegen der Hauptströmung (17) umlagerbar ist.

12. Dampfturbine (10, 20), insbesondere Hochtemperatur-Dampfturbine, mit einem Dampfturbinen-Körper nach einem der vorhergehenden Ansprüche.

13. Verfahren zum Kühlen einer Dampfturbine (10, 20) gemäß Anspruch 12, wobei
- der Strömungskanal (15) mit einer Hauptströmung (17) eines fluiden Arbeitsmediums mit einem Strömungsdruck beaufschlagt wird,
- das Kühlkanalsystem (19) mit einer Kühlmediumströmung mit einem Kühlmediumdruck beaufschlagt wird,
**dadurch gekennzeichnet, dass**
- in Längsrichtung (9) im Kühlkanalsystem (19) der Kühlmediumdruck (p, p₁>p₂>p₃) mit wenigstens einem Strömungswiderstand in Form einer Druckminderungseinrichtung (21, 60, 70, 80) selbstregelnd über dem Strömungsdruck (P, P₁>P₂>P₃) gehalten wird.

14. Verwendung einer selbstregelnden Druckminderungseinrichtung (21, 60, 70, 80) als Strömungswiderstand im Kühlkanalsystem (19) einer Dampfturbine (10, 20) nach Anspruch 12, um bei Betrieb der Dampfturbine (10, 20) entlang der Längsrichtung (9) den Kühlmediumdruck (p, p₁>p₂>p₃) selbstregelnd über dem Strömungsdruck (P, P₁>P₂>P₃) zu halten.

## Claims

1. Steam turbine body (5, 31) which along a longitudinal direction (9) delimits a flow duct (15) which is intended for receiving a main flow (17) of a fluid working medium with a flow pressure (P, P₁>P₂>P₃), and which has a cooling-duct system (19), open to the flow duct (15), for receiving a cooling-medium flow with a cooling-medium pressure, there being arranged in the cooling-duct system (19) at least one flow resistance in the form of a pressure-reducing device (21, 60, 70, 80) which is self-regulating and is designed to keep the cooling-medium pressure (p, p₁>p₂>p₃) above the flow pressure (P, P₁>P₂>P₃) along the longitudinal direction, **characterized in that** the cooling-duct system (19) has a main cooling duct (23) which extends in the longitudinal direction (9) over the extent of at least one blade row (7, 35) and has a branch cooling duct (25) which branches off from the main cooling duct (23) and is open to the flow duct (15), the pressure-reducing device (21) being arranged in the main cooling duct (23) and/or in the branch cooling duct (25).

2. Steam turbine body according to Claim 1, **characterized in that** the body carries a number of blade rows (7, 35) which have a plurality of blades (30) and are arranged one behind the other in the longitudinal direction (9) and which extend in each case into the flow duct, and the branch cooling duct (25) has a ring duct (45) surrounding a blade row (7, 35).

3. Steam turbine body according to Claim 1 or 2, **characterized in that** the branch cooling duct (25) has one or more blade ducts (47) which emanate from a ring duct (45) and which lead into a number of or all the blades (30) of a blade row (7, 35).

4. Steam turbine body according to one of Claims 1 to 3, **characterized in that** the cooling-duct system (19) is arranged largely symmetrically about a central axis (9).

5. Steam turbine body according to one of Claims 1 to 4 in the form of a steam turbine rotor (31).

6. Steam turbine body according to Claim 5, **characterized in that** the cooling-duct system (19) has a port (49) which issues into a region (51) between a head (41) of a moving blade (30) and a steam turbine casing (55).

7. Steam turbine body according to one of Claims 1 to 4 in the form of a steam turbine casing (5).

8. Steam turbine body according to Claim 7, **characterized in that** the cooling-duct system (19) has a port (49) which issues into a sealing region (51) between a head (41) of a guide blade (30) and a steam turbine rotor (55).

9. Steam turbine body according to one of Claims 1 to 8, **characterized in that** the pressure-reducing device (21) is produced in the form of a ball valve (60, 70) spring-loaded counter to the cooling-medium flow.

10. Steam turbine body according to one of Claims 1 to 8, **characterized in that** the pressure-reducing device (21) is produced in the form of a prestressed slide (80).

11. Steam turbine body according to one of Claims 1 to 10, **characterized in that** a number of self-regulating pressure-reducing devices (21, 60, 70, 80) in the cooling-duct system (19) are designed in such a way that cooling medium of a cooling-medium flow (69) can be reorganized in a direction along or opposite to the main flow (17) in the cooling-duct system (19) as a function of the operating state of a steam turbine (10, 20).

12. Steam turbine (10, 20), in particular high-temperature steam turbine, with a steam turbine body according to one of the preceding claims.

13. Method for cooling a steam turbine (10, 20) according to Claim 12,
- the flow duct (15) being acted upon by a main flow (17) of a fluid working medium with a flow pressure,
- the cooling-duct system (19) being acted upon by a cooling-medium flow with a cooling-medium pressure,
**characterized in that**
- the cooling-medium pressure (p, p₁>p₂>p₃) is kept above the flow pressure (P, P₁>P₂>P₃) in the longitudinal direction (9) in the cooling-duct system (19) in a self-regulating manner by means of at least one flow resistance in the form of a pressure-reducing device (21, 60,70, 80).

14. Use of a self-regulating pressure-reducing device (21, 60, 70, 80) as a flow resistance in the cooling-duct system (19) of a steam turbine (10, 20) according to Claim 12, in order to keep the cooling-medium pressure (p, p₁>p₂>p₃) above the flow pressure (P, P₁>P₂>P₃) along the longitudinal direction (9) in a self-regulating manner when the steam turbine (10, 20) is in operation.

## Revendications

1. Corps ( 5, 31 ) de turbine à vapeur,
qui délimite suivant une direction ( 9 ) longitudinale , un canal ( 15 ) d'écoulement prévu pour la réception d'un courant ( 17 ) principal d'un milieu de travail fluide ayant une pression ( P, P1>P2>P3 ) d'écoulement, et
qui a un système ( 19 ) de canalisation de refroidissement ouvert vers le canal ( 15 ) d'écoulement pour la réception d'un courant de milieu de refroidissement ayant une pression de milieu de refroidissement,
dans lequel il est disposé dans le système ( 19 ) de canalisation de refroidissement au moins une résistance à l'écoulement sous la forme d'un dispositif ( 21, 60, 70, 80 ) de diminution de la pression, qui se règle de soi-même et qui est conçu pour maintenir dans la direction longitudinale la pression ( p, p1>p2>p3 ) du milieu de refroidissement au dessus de la pression ( P, P1>P2>P3 ) d'écoulement,
**caractérisé en ce que**
le système ( 19 ) de canalisation de refroidissement a un canal ( 23 ) de refroidissement principal qui s'étend dans la direction ( 9 ) longitudinale sur une étendue d'au moins une rangée ( 7, 35 ) d'aubes, et
qui a un canal ( 25 ) de refroidissement de dérivation qui bifurque du canal ( 23 ) de refroidissement principal et qui est ouvert vers le canal ( 15 ) d'écoulement,
le dispositif ( 21 ) de diminution de la pression étant monté dans le canal ( 23 ) de refroidissement principal et/ou dans le canal ( 25 ) de refroidissement de dérivation.

2. Corps de turbine à vapeur suivant la revendication 1,
**caractérisé en ce que**
le corps porte un certain nombre de rangées ( 7, 35 ) d'aubes qui ont plusieurs aubes ( 30 ), qui sont disposées les unes derrières les autres dans la direction ( 9 ) longitudinale et qui s'étendent respectivement dans le canal d'écoulement, et
le canal ( 25 ) de refroidissement de dérivation comporte un canal ( 45 ) annulaire entourant une rangée ( 7, 35 ) d'aubes.

3. Corps de turbine à vapeur suivant la revendication 1 ou 2,
**caractérisé en ce que**
le canal ( 25 ) de refroidissement de dérivation comporte un ou plusieurs canaux ( 47 ) d'aube, qui partent du canal ( 45 ) annulaire et qui mènent dans un certain nombre ou dans toutes les aubes ( 30 ) d'une rangée ( 7, 35 ) d'aubes.

4. Corps de turbine à vapeur suivant l'une des revendications 1 à 3,
**caractérisé en ce que**
le système ( 19 ) de canalisation de refroidissement est dans une grande mesure symétrique autour d'un axe ( 9 ) central.

5. Corps de turbine à vapeur suivant l'une des revendications 1 à 4 sous la forme d'un rotor ( 31 ) de turbine à vapeur.

6. Corps de turbine à vapeur suivant la revendication 5,
**caractérisé en ce que**
le système ( 19 ) de canalisation de refroidissement a une ouverture ( 49 ) qui débouche dans une zone ( 51 ) entre une tête ( 41 ) d'une aube ( 30 ) mobile et un carter ( 55 ) de turbine à vapeur.

7. Corps de turbine à vapeur suivant l'une des revendications 1 à 4 sous la forme d'un carter ( 5 ) de turbine à vapeur.

8. Corps de turbine à vapeur suivant la revendication 7,
**caractérisé en ce que**
le système ( 19 ) de canalisation de refroidissement à une ouverture ( 49 ) qui débouche dans une zone ( 51 ) d'étanchéité entre une tête ( 41 ) d'une aube ( 30 ) directrice et un rotor ( 55 ) de turbine à vapeur.

9. Corps de turbine à vapeur suivant l'une des revendications 1 à 8,
**caractérisé en ce que**
le dispositif ( 21 ) de diminution de la pression est sous la forme d'un robinet ( 60, 70 ) à bille chargée par un ressort à l'encontre du courant du milieu de refroidissement.

10. Corps de turbine à vapeur suivant l'une des revendications 1 à 8,
**caractérisé en ce que**
le dispositif ( 21 ) de diminution de la pression est sous la forme d'un tiroir ( 80 ) précontraint.

11. Corps de turbine à vapeur suivant l'une des revendications 1 à 10,
**caractérisé en ce que**
un certain nombre de dispositifs ( 21, 60, 70, 80 ) de diminution de la pression se réglant d'eux même est mis dans le système ( 19 ) de canalisation de refroidissement, **en ce que** du milieu de refroidissement d'un courant ( 69 ) de milieu de refroidissement peut, en fonction de l'état de fonctionnement d'une turbine ( 10, 20 ) à vapeur, passer dans le système ( 19 ) de canalisation de refroidissement dans le sens du courant ( 17 ) principal ou dans le sens contraire.

12. Turbine ( 10, 20 ) à vapeur, notamment de turbine à vapeur à haute température, ayant un corps de turbine à vapeur suivant l'une des revendications précédentes.

13. Procédé de refroidissement d'une turbine ( 10, 20 ) à vapeur suivant la revendication 12, dans lequel
- le canal ( 15 ) d'écoulement est alimenté en un courant ( 17 ) principal d'un milieu de travail fluide ayant une pression d'écoulement,
- un système ( 19 ) de canalisation de refroidissement est alimenté en un courant de milieu de refroidissement ayant une pression de milieu de refroidissement,
**caractérisé en ce que**
- dans la direction ( 9 ) longitudinale du système ( 19 ) de canalisation de refroidissement, on maintient la pression ( p, p1>p2>p3 ) du milieu de refroidissement, par au moins une résistance à l'écoulement sous la forme d'un dispositif ( 21, 60, 70, 80 ) de diminution de la pression se réglant de soi-même, au dessus de la pression ( P, P1>P2>P3 ) d'écoulement.

14. Utilisation d'un dispositif ( 21, 60, 70, 80 ) de diminution de la pression se réglant de soi-même comme résistance à l'écoulement dans le système ( 19 ) de canalisation de refroidissement d'une turbine ( 10, 20 ) à vapeur suivant la revendication 12 pour maintenir, lors du fonctionnement de la turbine ( 10, 20 ) à vapeur, le long de la direction ( 9 ) longitudinale, la pression ( p, p₁>p₂>p₃ ) du milieu de refroidissement avec réglage de soi-même au dessus de la pression ( P, P₁>P₂>P₃ ) d'écoulement.
